# EUROPÄISCHE PATENTSCHRIFT

(11) **EP 2 126 606 B1**
(45) Veröffentlichungstag und Bekanntmachung des Hinweises auf die Patenterteilung: **14.07.2010**
(21) Anmeldenummer: 08707687.3
(22) Anmeldetag: 13.02.2008
(51) Int. Cl.: G01S 13/90, G01S 7/03

(54) **VORRICHTUNG ZUR ABBILDUNG VON PRÜFOBJEKTEN MITTELS ELEKTROMAGNETISCHER WELLEN, INSBESONDERE ZUR KONTROLLE VON PERSONEN AUF VERDÄCHTIGE GEGENSTÄNDE**
APPARATUS FOR DEPICTING TEST OBJECTS USING ELECTROMAGNETIC WAVES, PARTICULARLY FOR CHECKING PEOPLE FOR SUSPICIOUS ARTICLES
DISPOSITIF POUR OBTENIR L'IMAGE D'OBJETS À CONTRÔLER AU MOYEN D'ONDES ÉLECTROMAGNÉTIQUES, EN PARTICULIER POUR VÉRIFIER SI DES PERSONNES SONT EN POSSESSION D'OBJETS SUSPECTS

(30) Priorität: 21.02.2007 DE 102007008871
(43) Veröffentlichungstag der Anmeldung: 02.12.2009
(73) Patentinhaber: Smiths Heimann GmbH, 65205 Wiesbaden (DE)
(72) Erfinder: BARTSCHER, Bernd, 65199 Wiesbaden (DE); FLEHMIG, Uwe, 65207 Wiesbaden (DE); JECK, Michael, 55122 Mainz (DE)
(74) Vertreter: Thul, Hermann
(86) Internationale Anmeldenummer: PCT/EP2008/001073
(87) Internationale Veröffentlichungsnummer: WO 2008/101619

(56) Entgegenhaltungen:
- WO-A-2006/088845
- DE-A1-102005 042 463
- DE-A1-102006 006 962
- DE-C1- 3 801 626
- US-B1- 6 492 955
- BING SUN ET AL: "Image Formation Algorithm for the Implementation of Circular Scanning SAR" RADAR, 2006. CIE '06. INTERNATIONAL CONFERENCE ON, IEEE, PI, 1. Oktober 2006 (2006-10-01), Seiten 1-4, XP031073278 ISBN: 978-0-7803-9582-4

## Beschreibung

Die Erfindung betrifft eine Vorrichtung zur Abbildung von Prüfobjekten mittels elektromagnetischer Wellen mit folgenden Merkmalen:
- eine Antenne (1), die elektromagnetische Wellen, insbesondere Millimeterwellen, ausstrahlt,
- Mittel zur räumlichen Bündelung der ausgestrahlten Wellen und
- Mittel zur Manipulation der Wellen an der Stelle (5) hoher Bündelung derart, dass diese Stelle (5) als bewegte virtuelle Antenne für eine SAR-Auswertung dient, wobei
   - - die Mittel zur räumlichen Bündelung ein rotierbar gelagertes, fokussierendes oder defokussierendes quasi-optisches Element und
   - - die Mittel zur Manipulation der Wellen an der Stelle (5) hoher Bündelung einen Reflektor (4) enthalten.

Bei eine in Dokument WO 2006/088845 beschriebene Vorrichtung zur Abbildung von Prüfobjekten werden mittels eines optischen Sytems elektromagnetische Wellen auf ein Prüfobjekt fokussiert und das Prüfobjekt abgetastet.
Bei einer derartigen, in der deutschen Patentanmeldung 10 2005 042 463 beschriebenen

Vorrichtung der gattungsgemäßen Art werden zur Kontrolle von Personen oder Gepäckstücken (nachfolgend als Prüfobjekte bezeichnet) auf versteckte gefährliche Gegenstände (Waffen, Explosivstoffe) die Prüfobjekte mit Millimeterwellen abgescannt, um verdächtige Gegenstände zu detektieren. Dabei wird das Prüfobjekt entlang seines Umfangs sukzessiv mit Millimeterwellen beleuchtet, die gestreuten Wellen werden empfangen und für eine bildhafte Darstellung des Prüfobjekts nach dem SAR-Prinzip ausgewertet.

Die in der DE 10 2005 042 463 beschriebene Vorrichtung ermöglicht es, ein zweidimensionales SAR-Verfahren anzuwenden, das sowohl in X- als auch in Y-Richtung eine hohe Auflösung ermöglicht. Durch die Verwendung von bewegbaren virtuellen Antennen lässt sich das SAR-Verfahren realisieren, ohne dass komplexe Antennenansteuerungen erforderlich sind.

Der Erfindung liegt die Aufgabe zugrunde, eine Vorrichtung der gattungsgemäßen Art so zu verbessern, dass sie eine verbesserte Auflösung bei geringerer Verzerrung mit geringerem apparativem Aufwand ermöglicht.

Zur Lösung dieser Aufgabe sind das quasi-optische, fokussierende oder defokussierende Element und der Reflektor um eine gemeinsame Drehachse mit gleicher Winkelgeschwindigkeit rotierbar gelagert. Diese Konstruktion ermöglicht vergrößerte Öffnungswinkel der elektromagnetischen Strahlung. Diese führen sowohl zu einem vergrößerten Abtastbereich des Prüfobjekts, als auch zu einer vergrößerten Apertur der virtuellen Antenne für die SAR-Auswertung. Der Abstand zwischen der Drehachse des fokussierenden oder defokussierenden Elements und der virtuellen Antenne kann möglichst groß gestaltet werden, um einen großen Abtastbereich auf dem Prüfobjekt zu erhalten.

Die abhängigen Ansprüche enthalten bevorzugte, da besonders vorteilhafte Ausgestaltungen einer erfindungsgemäßen Vorrichtung:
Die Anordnung des quasi-optischen, fokussierenden oder defokussierenden Elements und des Reflektors in einem gemeinsamen, rotierbar gelagerten Bauteil nach Patentanspruch 2 ist konstruktiv vorteilhaft.

Durch die Gestaltung des Reflektors als fokussierend oder defokussierend für die elektromagnetischen Wellen erhält man nach Art eines Teleskops zwei fokussierende oder defokussierende Elemente. Dies ermöglicht eine verzehrungsfreie Gestaltung der bewegten virtuellen Quelle.

Eine Gestaltung sowohl des quasi-optischen Elements als auch des Reflektors als fokussierend ergibt einen teleskopartigen kompakten Aufbau.

Bevorzugt sind das quasi-optische Element und der Reflektor als Spiegel gestaltet. Eine möglichst einfach zu steuernde auszuwertende Bewegung der virtuellen Antenne ergibt sich, wenn nach Patentanspruch 6 das quasi-optische Element und der Reflektor so gestaltet und angeordnet sind, dass der auf das quasi-optische Element einfallende Zentralstrahl parallel zu dem Zentralstrahl verläuft, der den Reflektor verlässt.

Nachfolgend wird die Erfindung anhand zweier Ausführungsbeispiele näher erläutert.
- Figur 1: zeigt als Prinzipskizze die Funktion der Vorrichtung,
- Figur 2: zeigt die Rückansicht und
- Figur 3: die Vorderansicht einer Vorrichtung mit Z-förmigen Strahlengang,

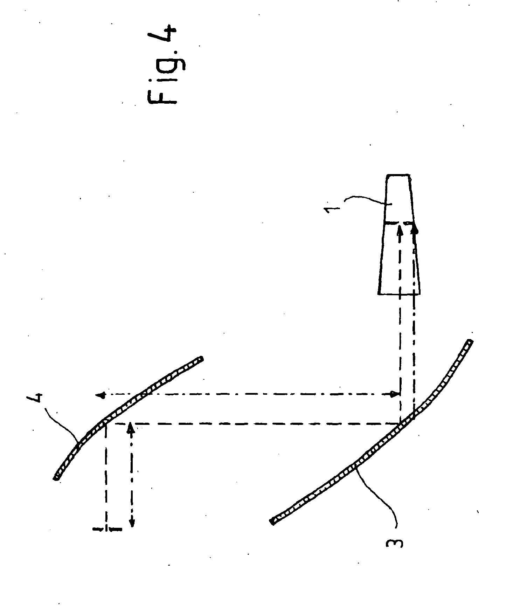

- Figur 4: zeigt den Strahlengang im Querschnitt,
- Figur 5: zeigt eine andere Vorrichtung mit U-förmigen Strahlengang,
- Figur 6: zeigt im Querschnitt den Strahlengang dieser Vorrichtung.

Die in den Figuren dargestellten Vorrichtungen sind jeweils Teil einer Prüfvorrichtung, die zur Kontrolle von Flugpassagieren auf einem Flughafen dient. Mit der Prüfvorrichtung werden die Flugpassagiere beim Check-in auf verdächtige Gegenstände wie Waffen oder Explosivstoffe geprüft. Die zur Beleuchtung der Prüfobjekte verwendeten elektromagnetischen Wellen haben eine Frequenz zwischen 1 GHz und 10 THz. Bevorzugt werden Millimeterwellen mit einer Frequenz zwischen 30 GHz und 300 GHz verwendet. Zum Empfang der reflektierten Wellen können entweder die Sendeantennen selbst oder getrennte Empfangsantennen verwendet werden.

Bevorzugt enthält die Prüfvorrichtung eine Plattform, auf der sich das Prüfobjekt, beispielsweise ein Flugpassagier, befindet, während die Kontrolle durchgeführt wird. Nach einer Ausführungsform rotieren die Sende- und Empfangssysteme um das stillstehende Prüfobjekt, um es entlang seines Umfangs sukzessiv mit Millimeterwellen zu beleuchten. Alternativ ist es auch möglich, das Prüfobjekt selbst auf einer Plattform vor einem ortsfest angeordneten Sende- und Empfangssystem rotieren zu lassen.

Weiterhin enthält die Prüfvorrichtung ein Auswertesystem mit entsprechender Rechnerleistung, von dem die empfangenen, vom Prüfobjekt gestreuten Wellen nach dem SAR-Prinzip ausgewertet werden, um eine bildhafte Darstellung des Prüfobjekts zu erhalten. Die erstellten Bilder werden einer Bedienungsperson auf entsprechenden Anzeigegeräten angezeigt.

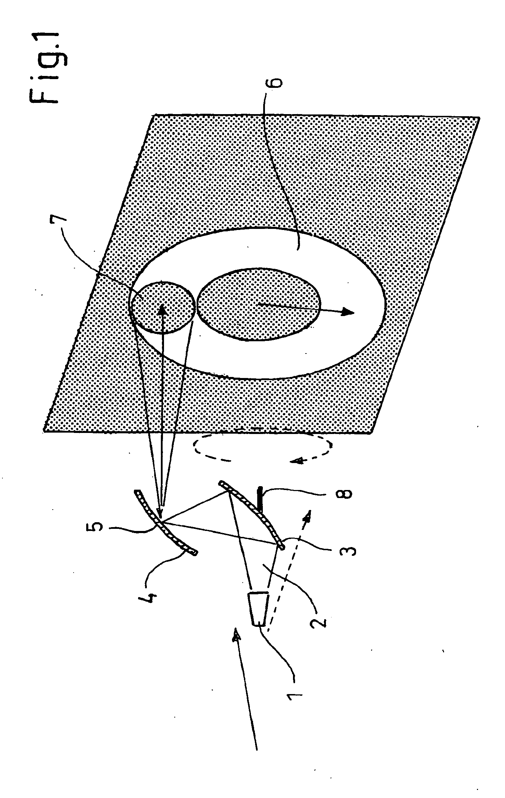

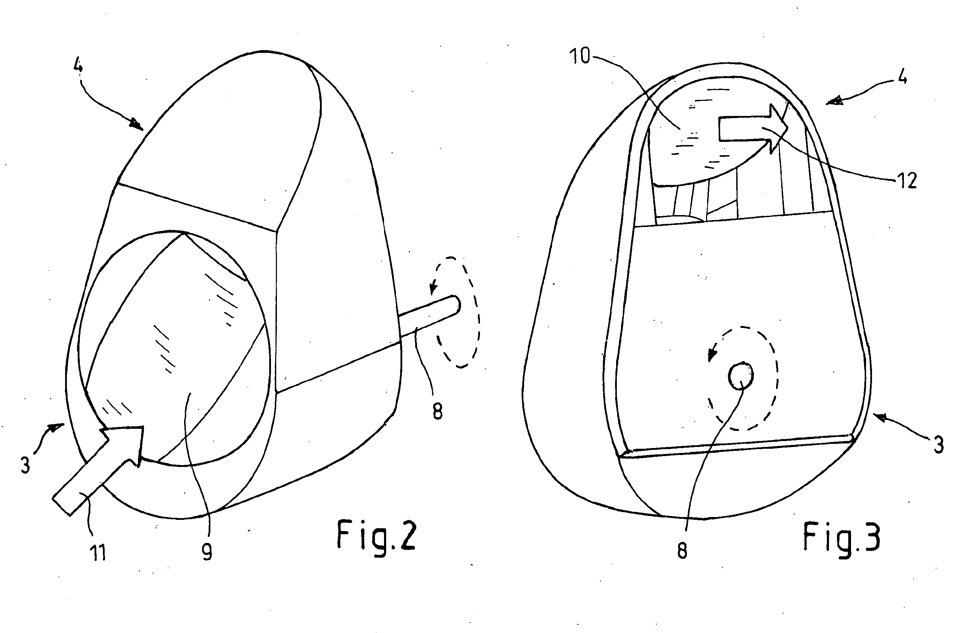

Die in den Figuren 1 und 2 dargestellte Ausführungsform enthält eine Antenne 1, bevorzugt eine Hornantenne, die Millimeterwellen 2 abstrahlt. Die Millimeterwellen 2 treffen auf ein rotierbar gelagertes, fokussierendes oder defokussierendes quasi-optisches Element 3, von dem sie reflektiert und zugleich gebündelt werden. Bevorzugt ist das Element 3 ein rotierender fokussierender Spiegel, der die Strahlen 2 in Richtung zu einem Reflektor 4 ablenkt und auf diesem bündelt, so dass die Stelle 5 höchster Bündelung auf dem Reflektor 4 liegt und mit diesem entlang eines Kreises bewegt wird. Der Reflektor 4 ist so geformt, dass im Zusammenwirken mit dem sich drehenden Bauelement 3 die abzubildende Fläche 6 kreisförmig abgetastet wird, wie in Figur 1 dargestellt ist.

Die Stelle 5 höchster Bündelung, also der Reflektionspunkt auf dem Reflektor 4, hat eine so geringe Ausdehnung, dass sie als virtuelle Antenne betrachtet werden kann, die im Fernfeld ein Strahlenbündel 7 mit großem Öffnungswinkel erzeugt. Dieser große Öffnungswinkel ist für eine gute Auflösung mit Hilfe von SAR-Algorithmen erforderlich. Das erzeugte Strahlenbündel 7 tastet das zu untersuchende Prüfobjekt kreisförmig ab.

Zusätzlich wird das Sende- und Empfangssystem horizontal (in Figur 1 aus der Zeichenebene heraus) oder vertikal (in Figur 1 nach oben und unten) bewegt, so dass insgesamt das Prüfobjekt zweidimensional abgetastet wird. Wird die gesamte Sende- und Empfangsanordnung um das Prüfungsobjekt herum bewegt, so ist auch eine Abtastung aus verschiedenen Ansichten möglich.

Wesentlich für die Erfindung ist, dass das quasi-optische, die von der Antenne 1 ankommenden Wellen fokussierende oder defokussierende Element 3 und der Reflektor 4 um eine gemeinsame Drehachse und mit gleicher Winkelgeschwindigkeit rotierbar gelagert sind. Die Ausführungsbeispiele zeigen die bevorzugten Ausführungsformen, bei denen das quasi-optische Element 3 und der Reflektor 4 jeweils als Spiegel mit fokussierender Wirkung gestaltet sind. Für eine möglichst kompakte Bauweise und eine vereinfachte Auswertung sind das quasi-optische Element 3 und der Reflektor 4 so gestaltet und angeordnet, dass der von der Antenne 1 auf das quasi-optische Element 3 fallende Zentralstrahl parallel zu dem Zentralstrahl des divergierenden Strahlenbündels verläuft, das den Reflektor 4 verlässt.

Bei beiden in der Zeichnung dargestellten Ausführungsformen sind das quasi-optische Element 3 und der Reflektor 4 in einem gemeinsamen Bauteil angeordnet, das um eine Drehachse 8 rotierbar gelagert ist. Bevorzugt ist das Bauteil so mit einem Drehantrieb verbunden, dass seine Drehachse 8 in etwa mit dem Zentralstrahl des von der Antenne 1 ausgehenden Strahlenbündels zusammenfällt. Die Drehachse 8 verläuft somit in etwa mittig durch das Element 3 und geneigt zu dessen Spiegelfläche 9, wie aus Figur 1 zu entnehmen ist. Das das Element 3 und den Reflektor 4 enthaltende Bauteil ist aus einem leichten, trägheitsarmen Material gefertigt. Es enthält eine Spiegelfläche 9 des quasi-optischen Elements 3, von der die von der Antenne 1 einfallenden Strahlen auf die nachfolgend angeordnete Spiegelfläche 10 des Reflektors 4 fokussiert werden. Die um die Drehachse rotierende Spiegelfläche 10 des Reflektors 4 dient somit als virtuelle Antenne für die SAR-Auswertung. Bei beiden Ausführungsformen sind die Spiegelflächen 9, 10 des quasi-optischen Elements 3 und des Reflektors 4 so gestaltet und angeordnet, dass der auf das quasi-optische Element einfallende Zentralstrahl parallel zu dem Zentralstrahl verläuft, der den Reflektor 4 verlässt.

In den Figuren 2 und 3 ist ein Bauteil dargestellt, das das quasi-optische Element 3 und den Reflektor 4 in einer so genannten Z-Anordnung enthält. Dabei sind die Spiegelfläche 9 des Elements 3 und die Spiegelfläche 10 des Reflektors so angeordnet, dass ein von hinten einfallender Strahl (Pfeil 11) auf die Spiegelfläche 9 auftrifft, von dieser gebündelt zu der Spiegelfläche 10 des Reflektors 4 umgelenkt wird und anschließend divergierend parallel zum einfallenden Strahl (Pfeil 11) und in dessen Richtung vorne aus dem Bauteil austritt (Pfeil 12).

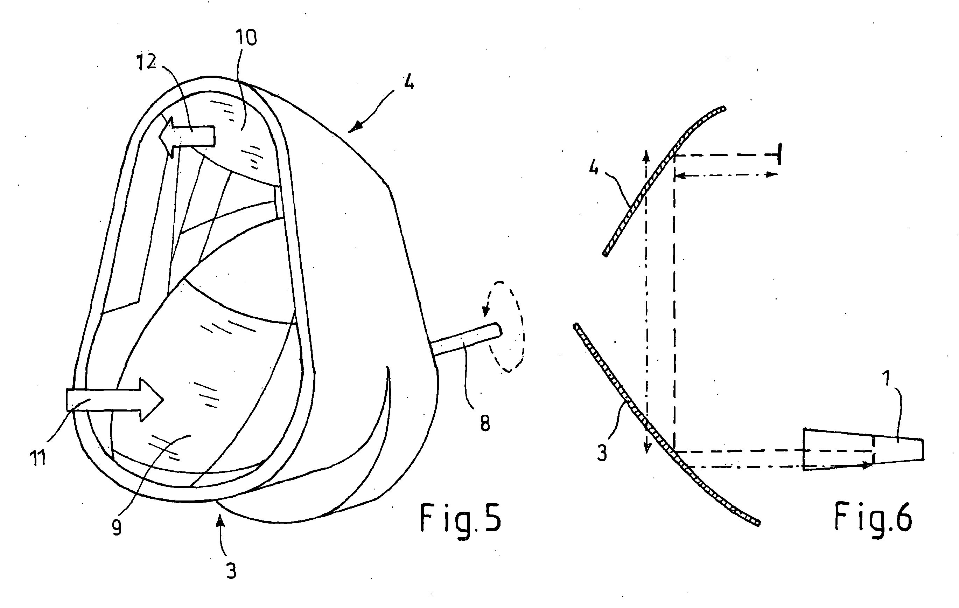

Bei der alternativen U-Anordnung nach Figur 5 trifft der einfallende Strahl 11 auf die Spiegelfläche 9 des quasi-optischen Elements 3 und wird - wie bei der Ausführungsform nach Figur 2 - von dieser nach oben auf die Spiegelfläche 10 des Reflektors 4 umgelenkt. Die Spiegelfläche 10 ist so angeordnet, dass das von ihr reflektierte divergierende Strahlenbündel (Pfeil 12) gegen die Einfallrichtung des von der Antenne 1 einfallenden Strahles (Pfeil 11) wieder aus dem Bauteil austritt. Auch bei dieser Ausführungsform verläuft der Zentralstrahl des austretenden divergierenden Strahlenbündels (Pfeil 12) parallel zu dem Zentralstrahl des einfallenden Strahlenbündels (Pfeil 11).

Vorstehend wird jeweils der Sendefall beschrieben. Da der Strahlengang reziprok ist, arbeitet das System im Empfangsfall entsprechend. Sende- und Empfangssignal werden durch geeignete Bauelemente getrennt, beispielsweise dadurch, dass die Antenne 1 über Koppler, über Zirkulatoren und/oder über eine Anordnung aus Polarisationsgittern mit einer Sende- bzw. Empfangseinrichtung verbunden ist.

Ebenfalls ist der Einsatz zweier räumlich dicht nebeneinander positionierter Antennen oder Antennensysteme anstelle einer Einzelantenne 1 möglich, die jeweils Sende- oder Empfangsfunktion haben. Dann baut sich die Antenne 1 aus mindestens einer Sendeantenne und mindestens einer räumlich getrennten Empfangsantenne auf.

## Patentansprüche

1. Vorrichtung zur Abbildung von Prüfobjekten mittels elektromagnetischer Wellen, insbesondere zur Kontrolle von Personen auf verdächtige Gegenstände, mit folgenden Merkmalen:
- eine Antenne (1), die elektromagnetische Wellen, insbesondere Millimeterwellen, ausstrahlt,
- Mittel zur räumlichen Bündelung der ausgestrahlten Wellen und
- Mittel zur Manipulation der Wellen an der Stelle (5) hoher Bündelung derart, das diese Stelle (5) als bewegte virtuelle Antenne für eine SAR-Auswertung dient, wobei
- - die. Mittel zur räumlichen Bündelung ein rotierbar gelagertes, fokussierendes oder defokussierendes, quasi-optisches Element und
- - die Mittel zur Manipulation der Wellen an der Stelle (5) hoher Bündelung einen Reflektor (4),enthalten,
und wobei das quasi-optische Element (3) und der Reflektor um eine gemeinsame Drehachse (8) und mit gleicher Winkelgeschwindigkeit rotierbar gelagert sind.

2. Vorrichtung nach Anspruch 1, **dadurch gekennzeichnet, dass** das quasi-optische Element (3) und der Reflektor (4) in einem gemeinsamen Bauteil angeordnet sind, das rotierbar gelagert ist.

3. Vorrichtung nach Anspruch 1 oder 2, **dadurch gekennzeichnet, dass** auch der Reflektor (4) als die elektromagnetischen Wellen fokussierend oder defokussierend gestaltet ist.

4. Vorrichtung nach Anspruch 3, **dadurch gekennzeichnet, dass** sowohl das quasi-optische Element (3) als auch der Reflektor (4) fokussierend gestaltet sind.

5. Vorrichtung nach Anspruch 4, **dadurch gekennzeichnet, dass** das quasi-optische Element (3) und der Reflektor (4) als Spiegel gestaltet sind.

6. Vorrichtung nach einem der Ansprüche 1 bis 5, **dadurch gekennzeichnet, dass** das quasi-optische Element (3) und der Reflektor (4) so gestaltet und angeordnet sind, dass der auf das quasi-optische Element (3) einfallende Zentralstrahl parallel zu dem Zentralstrahl verläuft, der den Reflektor (4) verlässt.

## Claims

1. Apparatus for imaging of test objects by means of electromagnetic waves, in particular for monitoring people for suspicious objects, having the following features:
- an antenna (1) which emits electromagnetic waves, in particular millimetric waves,
- means for three-dimensional focusing of the emitted waves, and
- means for manipulation of the waves at the point (5) of high focusing, such that this point (5) acts as a moving virtual antenna for SAR evaluation, wherein
- - the means for three-dimensional focusing contain a focusing or defocusing, quasi-optical element which is mounted such that it can rotate and
- - the means for manipulation of the waves contain a reflector (4) at the point (5) of high focusing,
and wherein the quasi-optical element (3) and the reflector are mounted such that they can rotate about a common rotation axis (8), and at the same rotation rate.

2. Apparatus according to Claim 1, **characterized in that** the quasi-optical element (3) and the reflector (4) are arranged in a common component, which is mounted such that it can rotate.

3. Apparatus according to Claim 1 or 2, **characterized in that** the reflector (4) also has a focusing or defocusing effect on the electromagnetic waves.

4. Apparatus according to Claim 3, **characterized in that** both the quasi-optical element (3) and the reflector (4) have a focusing effect.

5. Apparatus according to Claim 4, **characterized in that** the quasi-optical element (3) and the reflector (4) are in the form of mirrors.

6. Apparatus according to one of Claims 1 to 5, **characterized in that** the quasi-optical element (3) and the reflector (4) are designed and arranged such that the central beam, which is incident on the quasi-optical element (3), runs parallel to the central beam which leaves the reflector (4).

## Revendications

1. Dispositif pour former au moyen d'ondes électromagnétiques l'image d'objets à contrôler, en particulier pour vérifier si des personnes sont en possession d'objets suspects, et présentant les caractéristiques suivantes :
- une antenne (1) qui émet des ondes électromagnétiques et en particulier des ondes millimétriques,
- des moyens de formation d'un faisceau spatial des ondes émises et
- un moyen de manipulation des ondes à l'emplacement (5) de concentration supérieure de telle sorte que cet emplacement (5) serve d'antenne virtuelle mobile pour une évaluation SAR,
- les moyens de concentration spatiale contenant un élément quasi-optique monté à rotation, concentrant ou déconcentrant et
- les moyens de manipulation des ondes à l'emplacement (5) de concentration supérieure contiennent un réflecteur (4) et
- l'élément quasi-optique (3) et le réflecteur sont montés à rotation autour d'un axe de rotation (8) commun et à même vitesse angulaire.

2. Dispositif selon la revendication 1, **caractérisé en ce que** l'élément quasi-optique (3) et le réflecteur (4) sont disposés dans un composant commun qui est monté à rotation.

3. Dispositif selon les revendications 1 ou 2, **caractérisé en ce que** le réflecteur (4) est également configuré comme élément concentrant ou déconcentrant les ondes électromagnétiques.

4. Dispositif selon la revendication 3, **caractérisé en ce que** tant l'élément quasi-optique (3) que le réflecteur (4) sont concentrants.

5. Dispositif selon la revendication 4, **caractérisé en ce que** l'élément quasi-optique (3) et le réflecteur (4) sont configurés comme miroirs.

6. Dispositif selon l'une des revendications 1 à 5, **caractérisé en ce que** l'élément quasi-optique (3) et le réflecteur (4) sont configurés et disposés de telle sorte que le faisceau central incident sur l'élément quasi-optique (3) s'étend parallèlement au faisceau central qui quitte le réflecteur (4).
